**Europäisches Patentamt**

**European Patent Office**

**Office européen des brevets**

(19)

(11) Veröffentlichungsnummer : **0 331 971 B1**

(12) ## EUROPÄISCHE PATENTSCHRIFT

(45) Veröffentlichungstag der Patentschrift :
**06.05.92 Patentblatt 92/19**

(51) Int. Cl.$^5$ : **H02B 3/00,** B08B 3/02

(21) Anmeldenummer : **89103006.6**

(22) Anmeldetag : **21.02.89**

(54) **Verfahren zum Reinigen von elektrischen und elektronischen Bauteilen oder Geräten.**

(30) Priorität : **07.03.88 DE 3807405**

(43) Veröffentlichungstag der Anmeldung :
**13.09.89 Patentblatt 89/37**

(45) Bekanntmachung des Hinweises auf die
Patenterteilung :
**06.05.92 Patentblatt 92/19**

(84) Benannte Vertragsstaaten :
**AT BE DE ES FR GB IT NL SE**

(56) Entgegenhaltungen :
**DE-B- 1 188 714**
**FR-A- 2 377 721**
**GB-A- 1 155 306**

(73) Patentinhaber : **RELECTRONIC**
**Wiederherstellung elektronischer Systeme**
**GmbH**
**Oskar-Messter-Strasse 8**
**W-8045 Ismaning (DE)**

(72) Erfinder : **Wildenrath, Robert, Dipl.-Phys.**
**Nadistrasse 16**
**W-8000 München 40 (DE)**

(74) Vertreter : **Fuchs, Franz-Josef, Dr.-Ing.**
**Postfach 22 13 17**
**W-8000 München 22 (DE)**

**Beschreibung**

Die Erfindung betrifft ein Verfahren zum Reinigen von in ortsfesten Schaltschränken untergebrachten elektrischen und elektronischen Bauteilen oder Geräten mittels flüssiger Reinigungsmittel, insbesondere zum Entfernen von Kontaminationen nach Brand-, Wasser-, Staub- und Umweltschäden.

Bei Bränden dringen auch in vom Brandherd entfernt aufgestellte Schaltschränke durch Pyrolyse freigesetzte Dämpfe ein, die sich dann auf den darin untergebrachten elektrischen und elektronischen Bauteilen oder Geräten niederschlagen können. Um die weitere Funktion der elektrischen und elektronischen Anlagen sicherzustellen, müssen diese Brandgas-Kondensate, die zum Teil hochkorrosiv sind, möglichst unverzüglich wieder entfernt werden. Ähnliche Probleme treten auch bei Wasserschäden durch Löschwasser, Kondenswasser, Leitungswasser oder Überschwemmungen, bei Staubschäden durch Baustaub, Betriebs- oder Umgebungsstaub oder bei Umweltschäden mit Schwefeldioxid-, Schwefelwasserstoff- und Stickoxid-Belastungen oder mit Korrosionen durch andere aggressive Medien auf. Zur Entfernung der entsprechenden Kontaminationen wurden bislang leichtsiedende Reinigungsmittel, insbesondere Halogenkohlenwasserstoffe eingesetzt. Während des Reinigungsvorganges und kurz danach verdampfen dann diese leicht siedenden Reinigungsmittel, die zur Erzielung eines besseren Ablöseeffektes meist mit hoher Geschwindigkeit auf die zu reinigenden Bauteile oder Geräte gespritzt werden.

Werden nun die vorstehend erwähnten leichtsiedenden Reinigungsmittel aus Gründen des Umweltschutzes durch schwersiedende, insbesondere wäßrige Reinigungsmittel ersetzt, so kann es durch die geringe Verdunstungsrate und die elektrische Leitfähigkeit dieser Reinigungsmittel zu weiteren Problemen bzw.

Folgeschäden kommen. Insbesondere bei der Reinigung von in ortsfesten Schaltschränken untergebrachten elektrischen und elektronischen Bauteilen oder Geräten fließt das verwendete Reinigungsmittel unkontrolliert nach unten ab und sammelt sich dann an nicht oder nur schwer zugänglichen Stellen unterhalb der die Schaltschränke tragenden Zwischenböden oder in entsprechenden Zwischengeschossen. Dabei kann sich das zum Teil an nach unten aus dem Schaltschrank führenden Kabeln, Leitungen und dergleichen entlang fließende Reinigungsmittel auch an vom jeweiligen Schaltschrank weit entfernten Stellen ansammeln.

Der Erfindung liegt die Aufgabe zugrunde, ein Verfahren zum Reinigen von in ortsfesten Schaltschränken untergebrachten elektrischen und elektronischen Bauteilen oder Geräten mittels flüssiger Reinigungsmittel, insbesondere zum Entfernen von Kontaminationen nach Brand-, Wasser-, Staub- und Umweltschäden zu schaffen, bei welchem die verwendeten Reinigungsmittel und insbesondere wäßrige Reinigungsmittel zur Verhinderung von Folgeschäden einer kontrollierten Entsorgung zugeführt werden können.

Diese Aufgabe wird erfindungsgemäß dadurch gelöst, daß im unteren Bereich des Schaltschrankes eine nach unten führende Teile flüssigkeitsdicht umschließende Wanne geformt wird und daß das in der Wanne aufgefangene Reinigungsmittel kontrolliert abgeführt wird.

Der Erfindung liegt die Erkenntnis zugrunde, daß der untere Bereich von Schaltschränken trotz seiner äußerst komplexen Struktur mit einer Vielzahl von nach unten führenden Kabeln, Leitungen, Durchführungen, Halterungen und dergleichen mit verhältnismäßig geringem Aufwand durch eine Wanne abgedichtet werden kann, welche die nach unten führenden Teile flüssigkeitsdicht umschließt und später wieder entfernt werden kann. In dieser Wanne wird dann das Reinigungsmittel aufgefangen und beispielsweise durch ständiges Abpumpen an der tiefsten Stelle der Wanne einer kontrollierten Entsorgung zugeführt. Insbesondere bei der Verwendung kostspieliger Reinigungsmittel kann mit Hilfe der im unteren Bereich des Schaltschrankes installierten Wanne auch eine Reinigung im Umlaufbetrieb durchgeführt werden.

Gemäß einer besonders bevorzugten Ausgestaltung der Erfindung ist vorgesehen, daß die Wanne zumindest im Durchtrittsbereich der nach unten führenden Teile aus einem schmiegsamen Trägermaterial geformt wird und daß das Trägermaterial anschließend mit einem filmbildenden Dichtungsmittel beschichtet oder gedränkt wird. Die Verwendung derartiger schmiegsamer Trägermaterialien die anschließend abgedichtet werden ermöglicht ein einfaches Modellieren der Wannenstruktur in den kritischen Bereichen der Durchtrittsstellen. Dabei wurden mit netz-, gitter- oder gewebeförmigen oder auch mit faserigen Trägermaterialien sehr gute Ergebnisse erzielt.

Eine besonders einfache Abdichtung der kritischen Durchtrittsbereiche konnte dadurch erzielt werden, daß ein bandförmiges Trägermaterial mit mindestens einer Windung um die nach unten führenden Teile geschlungen wird.

Als besonders günstig hat es sich auch erwiesen, ein filmbildendes Dichtungsmittel auf Basis Latex zu verwenden. Insbeondere bei der Verwendung eines filmbildenden Dichtungsmittels auf Basis PVC-Latex ergab sich eine hervorragende Dichtungswirkung bei einfacher Applikation des Dichtungsmittels.

Wird das filmbildende Dichtungsmittel durch Spritzen aufgetragen, so ergibt sich hierdurch eine weitere Vereinfachung der Applikation des Dichtungsmittels.

Gemäß einer weiteren bevorzugten Ausgestaltung der Erfindung werden zur Bildung der Wanne zunächst

2

EP 0 331 971 B1

flächenabdeckende, grob angepaßte Wannenteile eingesetzt, worauf die verbliebenen Öffnungen durch das schmiegsame Trägermaterial und das filmbildende Dichtungsmittel geschlossen werden. Auf diese Weise kann die Wanne in kürzester Zeit und mit geringem Aufwand geformt und modelliert werden.

Die Wanne wird nach Beendigung der Reinigungsarbeiten in der Regel wieder entfernt, was unschwer durch Herausreißen ermöglicht wird. Das Entfernen kann jedoch noch dadurch erleichtert werden, daß vor der Bildung der Wanne deren Ansatzstellen an den nach unten führenden Teilen und/oder an Rahmenteilen oder Wandteilen des Schaltschrankes mit einem Trennmittel beschichtet werden.

Ein Ausführungsbeispiel der Erfindung ist in der Zeichnung dargestellt und wird im folgenden näher beschrieben.

Es zeigen

Fig. 1 eine Seitenansicht eines Schaltschrankes mit einer im unteren Bereich zum Auffangen von Reinigungsmitteln angeordneten Wanne,

Fig. 2 eine Draufsicht auf die Wanne gemäß Fig. 2 und

Fig. 3 eine Draufsicht auf die Wanne gemäß Fig. 2 jedoch vor dem eigentlichen Abdichten der kritischen Durchtrittsstellen.

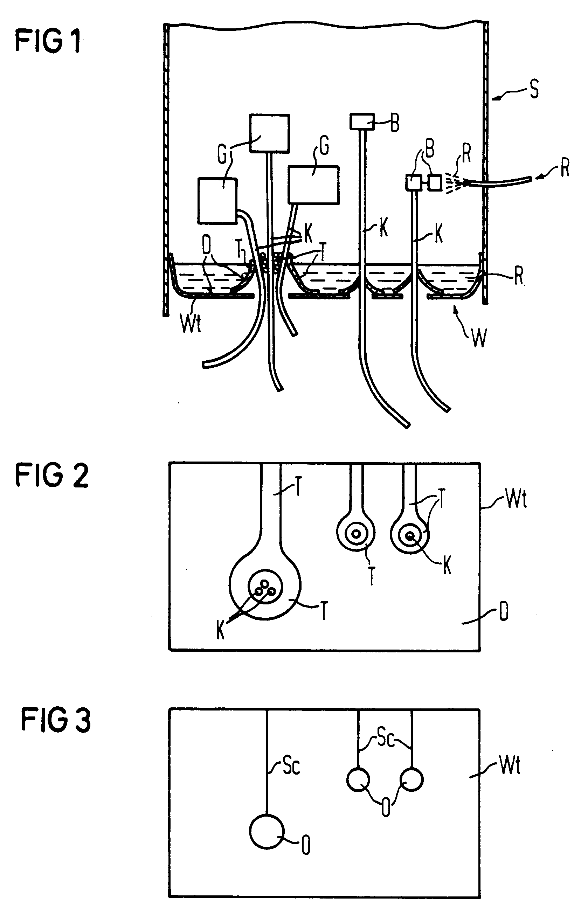

Fig. 1 zeigt in stark vereinfachter schematischer Darstellung einen Teil eines ortsfest aufgestellten Schaltschrankes S mit einigen darin untergebrachten elektrischen und elektronischen Bauteilen B und Geräten G. Diese nach einem Brandschaden durch Verrußung, Rauchgaskondensation, Chloridbeaufschlagung und eingetretene Korrosionen oder auch durch Löschpulverablagerungen kontaminierten Bauteile B und Geräte G sollen mit Hilfe eines mit hoher Geschwindigkeit aufgespritzten Reinigungsmittels R gereinigt werden. Hierbei wird das aufgespritzte Reinigungsmittel R in einer insgesamt mit W bezeichneten Wanne aufgefangen, welche vor Beginn des eigentlichen Reinigungsvorganges im unteren Bereich des Schaltschrankes S geformt wurde. Dabei ist zu erkennen, daß diese Auffangfunktion der Wanne W nur dann gewährleistet ist, wenn die im dargestellten Ausführungsbeispiel nach unten aus dem Schaltschrank S geführten Kabel K flüssigkeitsdicht umschlossen sind.

Zur Herstellung der in den Fig. 1 und 2 dargestellten Wanne W wird zunächst gemäß Fig. 3 ein grob angepaßter Wannenteil Wt gefertigt, der neben Durchtrittsöffnungen O für die Kabel K auch jeweils von den einzelnen Öffnungen O zum Rand hin verlaufende Schnitte Sc aufweisen muß. Dieser Wannenteil Wt, der auch als grober Wannenzuschnitt bezeichnet werden könnte, kann beispielsweise aus einer Folie, aus Pappe, aus einem Vließ- oder auch aus einem feinen Netz bestehen. Nach seiner Installation im unteren Bereich des Schaltschrankes S kann eine gegebenenfalls erforderliche Fixierung des Wannenteils Wt an den Wandungen des Schaltschrankes S beispielsweise mit Hilfe eines in der Zeichnung nicht näher dargestellten Klebebandes vorgenommen werden. Daraufhin werden die durch den Wannenteil Wt nach unten führenden Kabel K mit einem bandförmigen, schmiegsamen Trägermaterial T, beispielsweise einer Mullbinde umwickelt, bis sämtliche Öffnungen O vollständig abgedeckt sind. Bei bündelweise verlegten Kabeln K können die Zwischenräume zwischen den einzelnen Kabeln K ebenfalls mit einem derartigen Trägermaterial T verstopft werden. Zur eigentlichen Abdichtung wird dann an den noch nicht flüssigkeitsdichten Stellen der Wanne W und insbesondere an den Durchtrittsstellen der Kabel K ein filmbildendes Dichtungsmittel D aufgetragen. Wird für den Wannenteil Wt ein gewebeförmiges oder netzförmiges Material verwendet, so erfolgt der Auftrag des Dichtungsmittels D ganzflächig. Das beispielsweise durch Spritzen aufgetragene Dichtungsmittel D muß filmbildende Eigenschaften haben und eine fest zusammenhängende, flüssigkeitsdichte und gegen das verwendete Reinigungsmittel R zumindest weitgehend resistente Haut bilden.

Beim Reinigungsvorgang kann das verwendete Reinigungsmittel R, bei welchem es sich beispielsweise um eine wäßrige Tensidlösung handelt, laufend abgepumpt und abgeführt werden. Ein Umlaufbetrieb unter Zwischenschaltung eines Filters ist ebenfalls möglich. In beiden Fällen ist somit eine kontrollierte Entsorgung des Reinigungsmittels R ohne die Gefahr von Folgeschäden möglich.

Die zeitweilig eingebrachte Wanne W muß nach Beendigung der Arbeiten in der Regel wieder entfernt werden. Da im Allgemeinen keine festen Materialien zur Gestaltung der Wanne W benutzt werden, ist das unschwer durch Herausreißen möglich.

Es hat sich nun als vorteilhaft herausgestellt, die Ansatzstellen für die spätere Wanne W an den Rahmenteilen, an den Kabeln K usw. vorher mit einem Trennmittel zu bepinseln. Durch diese Maßnahme wird das spätere rückstandsfreie Entfernen einfacher. Ohne vorherige Anwendung eines Trennmittels bleiben ggf. Reste der Wanne W hängen, die durch Nacharbeit beseitigt werden müssen.

Als gut geeignet für diesen Zweck haben sich handelsübliche Trennmittel, wie z.B. die Ölemulsion E 10 der Firma Wacker-Chemie GmbH, Postfach, D-8000 München 2, bewährt.

**Patentansprüche**

1. Verfahren zum Reinigen von in ortsfesten Schaltschränken untergebrachten elektrischen und elektronischen Bauteilen oder Geräten mittels flüssiger Reinigungsmittel, insbesondere zum Entfernen von Kontaminationen nach Brand-, Wasser-, Staub- und Umweltschäden, **dadurch gekennzeichnet,** daß im unteren Bereich des Schaltschrankes (S) eine nach unten führende Teile (K) flüssigkeitsdicht umschließende Wanne (W) geformt wird und daß das in der Wanne (W) aufgefangene Reinigungsmittel (R) kontrolliert abgeführt wird.

2. Verfahren nach Anspruch 1, **dadurch gekennzeichnet,** daß die Wanne (W) zumindest im Durchtrittsbereich der nach unten führenden Teile (K) aus einem schmiegsamen Trägermaterial (T) geformt wird und daß das Trägermaterial (T) anschließend mit einem filmbildenden Dichtungsmittel (D) beschichtet oder getränkt wird.

3. Verfahren nach Anspruch 2, **dadurch gekennzeichnet,** daß ein netz-, gitter- oder gewebeförmiges oder ein faseriges Trägermaterial (T) verwendet wird.

4. Verfahren nach Anspruch 2 oder 3, **dadurch gekennzeichnet,** daß ein bandförmiges Trägermaterial (T) mit mindestens einer Windung um die nach unten führenden Teile (K) geschlungen wird.

5. Verfahren nach einem der Ansprüche 2 bis 4, **dadurch gekennzeichnet,** daß ein filmbildendes Dichtungsmittel (D) auf Basis Latex verwendet wird.

6. Verfahren nach Anspruch 5, **dadurch gekennzeichnet,** daß ein filmbildendes Dichtungsmittel (D) auf Basis PVC-Latex verwendet wird.

7. Verfahren nach einem der Ansprüche 2 bis 6, **dadurch gekennzeichnet,** daß das filmbildende Dichtungsmittel (D) durch Spritzen aufgetragen wird.

8. Verfahren nach einem der Ansprüche 2 bis 7, **dadurch gekennzeichnet,** daß zur Bildung der Wanne (W) zunächst flächenabdeckende, grob angepaßte Wannenteile (Wt) eingesetzt werden und daß dann die verbleibenden Öffnungen durch das schmiegsame Trägermaterial (T) und das filmbildende Dichtungsmittels (D) geschlossen werden.

9. Verfahren nach einem der vorhergehenden Ansprüche, **dadurch gekennzeichnet,** daß vor der Bildung der Wanne (W) deren Ansatzstellen an den nach unten führenden Teilen (K) und/oder an Rahmenteilen oder Wandteilen des Schaltschrankes (S) mit einem Trennmittel beschichtet werden.

**Revendications**

1. Procédé pour nettoyer des composants ou des appareils électriques et électroniques, logés dans des armoires électriques fixes, à l'aide d'agents liquides de nettoyage, notamment pour l'élimination de contaminations après des incendies, des dégâts des eaux, des dommages provoqués par la poussière et des pollutions de l'environnement, caractérisé par le fait qu'une cuvette (W) qui entoure d'une manière étanche aux liquides des pièces (K) dirigées vers le bas, est formée dans la partie inférieure de l'armoire électrique (S) et que l'agent de nettoyage (R) collecté dans la cuvette (W) est évacué de façon contrôlée.

2. Procédé suivant la revendication 1, caractérisé par le fait que la cuvette (W) est formée, au moins dans la zone de traversée des pièces (K) dirigées vers le bas, par un matériau de support flexible (T) et que le matériau de support (T) est ensuite recouvert ou imprégné par un agent d'étanchéité (D) apte à former une pellicule.

3. Procédé suivant la revendication 2, caractérisé par le fait qu'on utilise un matériau de support (T) en forme de filet, de grille ou de tissu ou bien fibreux.

4. Procédé suivant la revendication 2 ou 3, caractérisé par le fait qu'on enroule un matériau de support en forme de bande (T) pour former au moins une spire autour des pièces (K) dirigées vers le bas.

5. Procédé suivant l'une des revendications 2 à 4, caractérisé par le fait qu'on utilise un agent d'étanchéité (D) apte à former une pellicule, à base de latex.

6. Procédé suivant la revendication 5, caractérisé par le fait qu'on utilise un agent d'étanchéité (D) apte à former une pellicule, à base de PVC-latex.

7. Procédé suivant l'une des revendications 2 à 6, caractérisé par le fait qu'on dépose l'agent d'étanchéité (D) apte à former une pellicule, par projection.

8. Procédé suivant l'une des revendications 2 à 7, caractérisé par le fait que pour la formation de la cuvette (W), on utilise tout d'abord des éléments de cuve (Wt), qui ont une certaine surface et sont adaptés de façon approximative et qu'on ferme ensuite les ouvertures subsistantes au moyen du matériau de support flexible (T) et de l'agent d'étanchéité (D) formant une pellicule.

9. Procédé suivant l'une des revendications précédentes, caractérisé par le fait qu'avant la formation de la cuvette (W), on recouvre par un agent de séparation les éléments saillants présents sur les pièces (K) dirigées vers le bas et/ou sur des éléments de cadre ou des éléments de paroi de l'armoire électrique (S).

## Claims

1. Method for cleaning electrical and electronic components or apparatuses housed in fixed-position switchgear cabinets by means of liquid cleaning agents, preferably for the removal of contamination following fire, water, dust and environmental damage, characterised in that a tub (W), enclosing in a liquid-proof manner parts (K) guided downwards, is formed in the lower region of the switchgear cabinet (S), and in that the cleaning agent (R) collected in the tub (W) is drained off in a controlled manner.

2. Method according to Claim 1, characterised in that the tub (W) is formed from a flexible supporting material (T), at least in the region through which the parts (K) guided downwards pass, and in that the supporting material (T) is subsequently coated or impregnated with a film-forming sealing agent (D).

3. Method according to Claim 2, characterised in that a network, latticed or mesh-shaped supporting material (T), or a fibrous supporting material (T), is used.

4. Method according to Claim 2 or 3, characterised in that a strip-shaped supporting material (T) having at least one turn is looped around the parts (K) guided downwards.

5. Method according to one of Claims 2 to 4, characterised in that a film-forming sealing agent (D) on a latex base is used.

6. Method according to Claim 5, characterised in that a film-forming sealing agent (D) on a PVC-latex base is used.

7. Method according to one of Claims 2 to 6, characterised in that the film-forming sealing agent (D) is applied by spraying.

8. Method according to one of Claims 2 to 7, characterised in that surface-covering, coarsely matched tub parts (Wt) are initially used to form the tub (W), and in that the remaining openings are then closed by means of the flexible supporting material (T) and the film-forming sealing agent (D).

9. Method according to one of the preceding claims, characterised in that, before forming the tub (W), its projecting points on the parts (K) guided downwards and/or on frame parts or wall parts of the switchgear cabinet (S) are coated with a separating agent.

FIG 1

FIG 2

FIG 3